(19) Europäisches Patentamt
European Patent Office
Office européen des brevets

(11) **EP 4 046 496 B1**

(12) **EUROPEAN PATENT SPECIFICATION**

(45) Date of publication and mention
of the grant of the patent:
**18.01.2023 Bulletin 2023/03**

(21) Application number: **21158351.3**

(22) Date of filing: **22.02.2021**

(51) International Patent Classification (IPC):
**A23C 19/082** (2006.01)  **A23J 3/10** (2006.01)
**A23J 3/22** (2006.01)  **A23J 3/28** (2006.01)
**A23L 29/256** (2016.01)

(52) Cooperative Patent Classification (CPC):
**A23J 3/227; A23C 19/082; A23J 3/10; A23J 3/285;**
**A23L 29/256;** A23L 33/16; A23L 33/19; A23L 33/21

(54) **MILK-PROTEIN BASED MEAT SUBSTITUTE**

AUF MILCHPROTEIN BASIERENDER FLEISCHERSATZ

SUBSTITUT DE VIANDE À BASE DE PROTÉINES DE LAIT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**24.08.2022 Bulletin 2022/34**

(73) Proprietor: **Dairy Protein Cooperation Food B.V.**
**2411 HS Bodegraven (NL)**

(72) Inventor: **LAVRIJSEN, Bas Willem Maarten**
**2411 HS Bodegraven (NL)**

(74) Representative: **V.O.**
**P.O. Box 87930**
**2508 DH Den Haag (NL)**

(56) References cited:
EP-A1- 1 759 593    EP-A2- 0 174 192
WO-A1-2020/226501    AU-B2- 2008 200 828
SE-B- 375 227    US-A1- 2011 171 359
US-A1- 2015 251 427    US-A1- 2020 029 590
US-A1- 2020 323 230

• THANGAVELU KARTHIKEYAN P ET AL: "Novel processing technologies and ingredient strategies for the reduction of phosphate additives in processed meat", TRENDS IN FOOD SCIENCE AND TECHNOLOGY, ELSEVIER SCIENCE PUBLISHERS, GB, vol. 94, 11 October 2019 (2019-10-11), pages 43-53, XP085906714, ISSN: 0924-2244, DOI: 10.1016/J.TIFS.2019.10.001 [retrieved on 2019-10-11]

Remarks:
The file contains technical information submitted after the application was filed and not included in this specification

EP 4 046 496 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field**

The invention relates to the production of meat-replacement products on the basis of the formation of a fibrous composition from milk proteins with alginate.

**Background**

A process of the aforementioned type is disclosed in WO 03/061400. Herein milk protein is separated from milk serum (whey) by initially subjecting milk to a cheese-making process, resulting in the formation of curd. The curd is converted into a finely distributed form, and mixed with a calcium-complexing agent (typically phosphate salts, such as typically used as emulsifying salts in making processed cheese), resulting in the formation of a homogenous mass. To this mass a hydrocolloid capable of precipitating with metal cations is added, typically an alginate. A fibrous product is then formed by adding a solution of at least divalent metal ions (typically calcium ions). This prompts the hydrocolloid to start precipitating with said ions, which results in the formation of a fibrous product, which has a meat substitute structure. Variants of this process have been described in EP1588626, EP1643850, EP1643851, and EP1771085.

Whilst resulting in a suitable meat-replacement, the known process has several drawbacks. One such drawback is the relatively high amount of salts, such as emulsifying salts and added calcium for cheesemaking , that are needed. This goes against the current tendency, as generally stimulated by health authorities in many countries, to reduce the amounts of salt in food products.

In the above process, the emulsifying salts are needed to remove calcium from the cheese matrix that forms the curd, so as to transfer the curd into a homogenous liquid mass from which fibres can be formed. This concerns not only calcium that is naturally present in milk, but also calcium that is added prior to curd formation. These salts are also necessary to bind calcium prior to the addition of the hydrocolloid. Otherwise, the hydrocolloid will untimely precipitate with calcium ions present. This does not result in the formation of a fibrous structure, or at least not in the formation of fibres having an adequate length to be perceived as meat-like. Rather, the process should allow the precipitation of hydrocolloid with cations to occur in such a manner that such precipitation will result in the formation of a fibrous product. In the aforementioned EP1588626 and EP1643851 some alternative starting materials are described, viz. sodium caseinate, whey protein concentrate, and skimmed milk powder. With all of these embodiments, a sodium polyphosphate emulsifying salt is added. A further background reference in this respect is AU 2008 200828. This reference claims that with milk powder, whey, or caseinate, it would be possible to form a fibrous product without adding polyphosphate (emulsifying salt). Nonetheless, this is exemplified with polyphosphate added.

A further background reference is EP0174192. This relates to a process for preparing heat resistant milk protein. The process comprises subjecting an aqueous solution or dispersion containing casein and an acidic polysaccharide to heat treatment at alkaline pH. The reference describes that thereby a casein is obtained which is resistant to both acids and bases, as well as good heat resistance. Preferably, the heat treatment is carried out in the presence of calcium or magnesium ions, in order to improve the thickening activity of the casein. EP1759593 discloses a method of making minced meat analogue that is very similar in structure, texture and appearance to freshly prepared minced meat by preparing a homogeneous mixture containing 5-20 wt.% of protein; 0.1-10 wt.% of water-soluble polysaccharide selected from alginate, pectin and mixtures thereof; and at least 60 wt.% water; combining the homogeneous mixture with an aqueous solution containing 0.1-6 wt.% of 1.1 multivalent metal cations to cross-link the water-soluble polysaccharide and to produce proteinaceous fibres; isolating said proteinaceous fibres; 1.2 mixing said proteinaceous fibres with covering materials in a weight ratio of 50:1 to 3:1 to form a composite, said covering materials including, by weight of the total amount of covering materials: 5-50 wt.% fat; 0.01-12 wt.% of red colouring substances; and optionally up to 60 wt.% water; and mincing said composite to produce a minced meat analogue. Suitable sources of protein include whey protein concentrate, caseinate, rennet casein, milk powder (i.e. selection) (i.e. when dissolved in water a "casein containing milk-based liquid is obtained"), curd and cheese.

**Summary**

The invention seeks to provide, *inter alia*, a process as above, yet wherein at least part of the emulsifying salts can be dispensed with.

To this end the invention provides, in one aspect, a process for the preparation of a fibrous composition by providing a casein-containing milk-based liquid selected from the group consisting of dissolved casein powder obtained from subjecting milk to microfiltration, a retentate obtained by subjecting milk to microfiltration, and mixtures thereof, subjecting said liquid to a treatment step comprising increasing its temperature to 60°C to 95°C, and increasing its pH to a value of 7 to prior to adding alginate, adding an alginate so as to form a liquid mass, and contacting the liquid mass with an aqueous solution comprising calcium ions so as to form fibres.

**Detailed description**

The process of the invention serves to produce a composition having a fibrous structure, wherein the fibres comprises a precipitated alginate enclosing available milk components including casein. Hereinafter this composition is briefly referred to as a fibrous composition.

The known process to make a fibrous meat replacement from milk protein, proceeds via a cheese making process, up to the formation of curd. Without wishing to be bound by theory, the inventors believe that the known process results in first making a cheese matrix with binding calcium-salts (viz., curd) and then breaking up the same cheese matrix by adding emulsifying salts. The invention is based on the judicious insight to avoid the unnecessary production of curd, and thus no longer necessitate the addition of emulsifying salts a, which in the prior art process is indispensable.

This is accomplished, according to the invention, by providing a different route to the liquid mixture which is eventually subjected to formation of a fibrous mass. Said liquid mixture comprises casein and an alginate as a hydrocolloid capable of precipitating with metal cations. In the process of the invention this liquid mixture can be obtained in a relatively simple two-step process.

The first step is subjecting milk to microfiltration (MF), so as to obtain a filtrate comprising whey proteins and other water soluble components, and a retentate (MF retentate) which comprises the casein fraction of the milk.

The retentate typically has a dry matter solids content of 10-40 wt.%, such as 15-25 wt.%, typically 18-22 wt.% such as 20 wt.%, and is a relatively thick liquid mass.

Before starting the microfiltration, the milk is subjected to decreaming so as to provide skim milk. Such skim milk generally has a fat content of below 0.1 wt.%, such as 0.04 wt.% to 0.08 wt.%, typically about 0.06 wt.%. After the process of microfiltering skimmed milk, the retentate can be brought to a desired fat content. This fat content can range from 0% or, e.g., up 2.5 wt.%, in the event that a diet meat replacement (no fat or low fat) is desired. The fat content can also be high, such as 10 wt. to 15 wt.% in the event that a high fat (e.g. pork) meat replacement is desired. In an interesting embodiment, the fat content is brought within a range of 2.5 wt.% to 7.5 wt.%, such as 4-6 wt.%, typically around 5 wt.%. In such embodiments the product is typically suitable as a chicken-like meat replacement. Any type of fat, vegetable fat or cream, can be added. It will be understood that in the event that the product is intended for vegetarians, as a meat replacement, animal fat will not normally be used. Preferably, dairy fat (cream) is used.

The MF retentate can be used as such, or upon reconstitution of a powder obtained by drying such MF retentate, typically by means of evaporation. Accordingly, the casein-containing milk-based liquid from which according to the present invention a fibrous composition is produced, is selected from the group consisting of dissolved casein powder obtained from subjecting milk to microfiltration, a retentate obtained by subjecting milk to microfiltration, and mixtures thereof. Unless indicated otherwise, the various embodiments and advantages of MF retentate described hereinbefore and hereinafter, are equally applicable to the reconstituted form of the retentate.

The application of MF retentate has significant process advantages as well. Thus, by presenting to the fibre-forming process a liquid from which soluble whey protein and other water-soluble components have been removed in advance, a much lower loss of these components occurs in the fibre-forming process.

Accordingly, a product is obtained that is distinguished from the milk-protein based fibrous products known in the art, by having a lower salt content. The latter is provided by the lower amount of calcium as compared to particularly curd-based processes (which involve the addition of calcium) and by the absence of emulsifying salts. Also in comparison with fibrous products obtained from milk powder, the calcium content is lower, since part of the milk calcium is removed with the filtrate upon microfiltration.

As such, the method of separating whey from casein by microfiltration is known. This is sometimes referred to as the cracking of milk. Cracking of milk as a technique is familiar to the skilled person. The applicable microfiltration membranes generally have a pore size in a range of from 0.05pm to 0.25pm, preferably 0.1$\mu$m to 0.2pm, preferably 0.1$\mu$m.

In carrying out the microfiltration, equipment can be applied with which the person skilled in the art is well familiar. Microfiltration equipment can, e.g., be based on ceramic membranes (Pall, Tami, Atech), or. e.g., polymeric membranes, typically spiral wound polymeric membranes, with membrane housing and pumps conventional in the art. The microfiltration processes can be carried out at a range of temperatures, preferably at most 60°C, such as from 10°C to 60°C, e.g. 50°C to 55°C. Optionally, in addition to microfiltration, a step of diafiltration can be carried out so as to further wash out the obtained concentrate and decrease the whey protein content of the casein fraction.

The casein containing milk-based liquid can be obtained from milk produced by any dairy animal. This is mostly cattle, and particularly cow (adult female cattle), but in addition to cattle, the following animals provide milk used by humans for dairy products: camels, donkeys, goats, horses, reindeer, sheep, water buffalo, yaks, and moose. Most preferably, the milk used to provide a casein containing milk-based liquid as used in the process of the invention is cow's milk or goat's milk.

The second step is mixing the MF retentate with an alginate, which is a hydrocolloid capable of precipitating with calcium ions.. A preferred type of calcium-reactive alginate is that obtained from "Brown algae". The amount of alginate can vary, depending on the desired length of fibres in the fibrous composition, and the desired toughness of the fibres. Generally a range of 0.5 wt.% to 5 wt.% will be applied, such as 1-4 wt.5, preferably 2-3 wt.%. Preferably a so-called liquiverter is used for mixing the alginate-powder with water to a liquid mass, i.e., mixing equipment in which mixing takes place under conditions of high shear, resulting in mixing hydrocolloid and water by creating a strong vortex.

Typically, the mixing of the casein containing mass and the liquid alginate is conducted so as to obtain a homogenous mixture. If desired, an additional homogenization step can be conducted. The resulting liquid, homogenous mass comprises the two components that are essential to, subsequently, carry out a step of precipitation and formation of a fibrous mass. These components are casein, and the hydrocolloid. Various mixing or homogenizing equipment can be used, such as paddle mixers or a tumbler.

If a solution of calcium ions is added to the homogenous mixture in which there are substantially no longer free calcium ions and which contains complexes of milk protein material and a hydrocolloid, i.e., the alginate, which precipitates with metal cations of this type, a fibrous product will be obtained in a controlled way by stirring the mass gently (e.g. in a paddle-mixer) and, optionally after washing and removal of excess moisture, has a meat substitute structure. The precipitation of the fibres containing alginate and milk protein is effectuated using an aqueous solution comprising calcium ions. Typically, the solution comprises 1 to 10 wt.% of $CaCl_2$., such as 2.5 to 7.5 wt.%, preferably 3 to 5 wt.%, such as about 4 wt.%. In a preferred embodiment, per gram of alginate, an amount of dry $CaCl_2$ of 0.2 to 0.4 g of dry is used, such as 0.3 g $CaCl_2$ per gram of alginate.

It will be understood that, at this stage, the hydrocolloid should not exhibit a substantial untimely precipitation with di- or polyvalent cations as may be present. Such precipitation should occur, in a controlled manner, in the eventual step of forming a fibrous product, which will be discussed below.

To this end, in the prior art process, the liquid, homogenous mass comprising casein and hydrocolloid, also comprises emulsifying salts. In such process, the amounts of emulsifying used, reflect their double purpose. One such purpose is, as discussed above, to prevent the untimely precipitation of the hydrocolloid. The other purpose, however, which in the prior art process is the overriding reason to add emulsifying salts, is to modify curd into a liquid mass, by removing calcium ions from the curd matrix. The process of the invention does not involve the making, and subsequent breaking up, of a cheese matrix.

In the present process , the addition of such emulsifying salts can be avoided altogether. This presents a further major departure from the process of the prior art. A key advantage is that a fibrous composition from milk protein can be obtained without emulsifying salts. This has health benefits, viz. a naturally lower amount of salts, as well as regulatory benefits, since no emulsifying salts need to be declared.

To this end, the MF retentate is subjected to a treatment step that comprises increasing the temperature and the pH of the MF retentate.

Without wishing to be bound by theory, the inventors believe that this puts to use a phenomenon that during heating of milk, dissolved calcium and phosphate become supersaturated and partly associate with casein micelles. The additional colloidal phosphate so formed has a molar ratio Ca/P ≈ 1. The reaction is believed to be:

$$Ca^{2+} + H_2PO_4^- \rightarrow CaHPO_4 + H^+$$ .

Said treatment step comprises increasing the temperature of the liquid to 65°C to 95°C, and the pH to a value of 7-9. The pH raise enables the above equilibrium to shift to the right-hand side, by capturing protons. As a result, more free calcium ions will be captured as calcium phosphate.

Preferably, said treatment step comprises increasing the temperature to 80°C to 90°C.

As indicated above, the treatment step as described, is believed to result in dissolved calcium and phosphate becoming supersaturated and partly associate with casein micelles. It will be understood that this is based on a reversible process. I.e., if the temperature were allowed to drop to below 60°C, particularly below 50°C, captured calcium ions may become partly liberated again over time. Accordingly, in order to retain a calcium ions-depleted casein liquid, the temperature is preferably kept at or above 60°C when the alginate is added. Also the resulting homogenous fibre-generation liquid mass is kept at such a temperature at least until the step of contacting said mass with an aqueous solution comprising divalent or polyvalent metal cations. Another option is to cool down to maximum 30°C and precipitating the mass to fibrous structure sufficiently rapidly, preferably immediately, in order to stay ahead of the reversed process of liberation of calcium-ions.

The pH increase can be conducted at any stage prior to adding the alginate. However, it is believed that a better effect of the pH increase is achieved by effecting this during, or before, the temperature-increasing step. Preferably, the pH increasing step is conducted during the temperature-increasing step, preferably at a temperature ranging from 7°C to 85°C, more preferably at a temperature ranging from 20°C to 40°C, such as at about 30°C.

Generally, the pH will not be increased to a value higher than 9. Preferably, the pH-increasing step comprises increasing the pH to a value in a range of from 7.0 to 8.0, such as 7.2 to 7.4.

Increasing pH is generally accomplished by adding a base. It will be understood that it is not advisable to use any base that would itself introduce calcium ions, such as $Ca(OH)_2$, or other divalent metal ions capable of complexing with the alginate to be added. Preferred bases include sodium hydroxide (NaOH) potassium hydroxide (KOH), ammonia, sodium carbonate ($Na_2CO_3$), urea, guanine, monovalent metal oxides, and organic amines such as hexamethylene tetramine.

The process of the invention provides a fibrous composition comprising casein and an alginate. Said composition can be described generally as comprising alginate fibres that enclose casein, and any other components enclosed from the casein containing milk-based liquid. The composition deviates from known compositions by comprising no added emulsifying salts. The composition accordingly is distinguished from known compositions comprising alginate-based fibres and casein as a protein. E.g., the compositions made from curd, such as provided in accordance with the aforementioned WO 03/061400, generally comprise 0.6 wt.% to 1 wt. % of emulsifying salts. Types of emulsifying salts are known to the skilled person. These typically include phosphates and citrates, such as sodium hexametaphosphate.

The composition is characterized by not containing any emulsifying salts.

The fibrous composition resulting from the process of the invention, is suitable as a meat replacement. It is generally not itself a final product. Rather, it suitably serves as a food intermediate to which, as desired, further food ingredients can be added.

If desired, edible components can be added prior to the composition prior to the formation of the fibrous product. Such components can be, e.g., a thickening agent, a filler, or an additional source of fibres. In interesting embodiment, cereal fibres are added such as oat fibres, wheat fibres, corn fibres, and the like.

Further, if desired, additional food ingredients not affecting the fibre-forming capability of the homogenous mass can be added at any stage prior to the step of fibre formation. This particularly refers to seasoning, such as by adding salt and/or spices and/or herbs.

The fibrous composition is suitable to serve as a protein-rich structuring agent in food. The fibres can be provided with spices, aroma's, and other edible and/or nutritional ingredients. The fibrous composition, with any added ingredients, will be formed into a dough, generally together with a binder such as methyl cellulose, chicken egg-white, locust bean gum, carrageenan, or other such edible thickeners familiar to the skilled person. Th resulting dough can be shaped as desired, e.g. recognizable as a burger, a schnitzel, smaller pieces such as nuggets or fingers, and other varieties. Before use, the shaped dough generally needs to be heated to a temperature in a range of from 60°C to 80°C, preferably at least 70°C (as this has a pasteurizing effect). The resulting product is suitable to be prepared by heating techniques such as frying, baking, or deep-frying.

Further, it can be desirable to provide the fibrous composition, before, during or after any cutting and/or shaping step, with one or more outside layers. Such outside layers can typically serve to form a crust after frying the resulting composition. This can be, e.g., a batter or a breading. Breading (also known as crumbing) is a dry grain-derived food coating for a piece of food, usually made from bread crumbs or a breading mixture with seasonings. Breading mixtures can be made, e.g., of breadcrumb, flour, cornmeal, and seasoning that the item to be breaded is dredged in before cooking. In an embodiment, the fibrous composition is first moistened, such as with buttermilk, raw egg, egg wash or other liquid, before breading.

In sum, a process is disclosed for the preparation of a fibrous structure, suitable as a meat replacement. The fibrous structure is formed from a milk-based liquid by precipitation of a hydrocolloid with a divalent salt such as calcium chloride. The milk-based fluid is a retentate from microfiltration.

The invention will hereinafter be further illustrated with reference to the following, non-limiting examples.

Example 1 (reference example not according to the invention)

Skimmed goat milk is subjected to microfiltration (using a ceramic membrane of pore size 0.1 pm). The retentate thereby obtained is used in this example.

To 300 mL of said retentate an amount of 2 g of a 10 wt.% aqueous solution of emulsifying salt [sodium hexametaphosphate) is added. The MF retentate is heated to 80°C. Subsequently 200 mL of a 4 wt.% aqueous solution of alginate (Vivapur® FD 175 ex Rettenmaier) is added, with stirring.

To the resulting composition 180 mL of a 4 wt.% aqueous solution of calcium chloride is slowly added, followed by gentle stirring. This results in the formation of a meat-like fibrous structure, comprising precipitated alginate which encapsulates non-soluble components from the composition.

The fibres are evaluated with reference to length, weight, and quality. It will be understood that, generally, fibres are formed of different lengths. Fibre length in the present Examples is given as a fibre length number, determined by visual inspection, ranging from 1 to 10. A fibre length number of 1 indicates very short fibres (maximally 2-3 mm), a fibre length number of 10 indicates a large majority of long fibres, up to about 10 cm length.

Quality is determined by visual and manual inspection and is rated on a scale from 0 to 10. Thereby 0 indicates a bad quality (short, soft, mushy) and 10 indicates an excellent quality (long, firm, juicy).

The quality of the process is checked with reference to the loss of whey after formation of the fibrous product. This is determined by the amount of dry matter solids, as a percentage of total dry matter solids, that is lost with process water. A lower loss generally indicates a better process, particularly with a better yield of casein milk components incorporated into the fibres.

The results are as follows:

- Fibre weight 378 g;
- Fibre length number: 8
- Fibre quality: 9
- Whey loss: 13 wt.%.

This reflects the production of a highly suitable fibrous composition. This product can be directly processed in food products, or it can be frozen and stored for later usage.

**Example 2 (reference example not according to the invention)**

The experiment of Example 1 is repeated with different amounts of emulsifying salts. By way of comparison, the same process is followed starting from curd. The curd is obtained by subjecting semi-skimmed bovine milk to coagulation by the addition of rennet in a standard Gouda cheese-making process, involving the addition of 0.5 mg of 33% $CaCl_2$ solution per litre of milk. As with the MF retentate, 300 mL of curd is employed in each experimental run.

The results are depicted in Table 1 below. As can be seen, when using MF retentate fibres are obtained of good weight, length and quality, when applying a limited amount of emulsifying salts. Also without emulsifying salts, the use of MF retentate allows the formation of a fibrous composition. In the event of employing curd as a starting material, the required amounts of emulsifying salt are much higher, and the overall fibre quality of the MF retentate-based compositions is not achieved.

Table 1

| Liquid | Amount of emulsifying salt solution | Fibre weigh t (g) | Fibre length number | Fibre quality | Whey loss (wt. %) |
|---|---|---|---|---|---|
| MF retentate | 0 | 332 | 6 | 6 | 17 |
| MF retentate | 1 | 373 | 7 | 8 | 13 |
| MF retentate | 2 | 378 | 8 | 9 | 13 |
| MF retentate | 4 | 387 | 9 | 9 | 12 |
| MF retentate | 8 | 407 | 9 | 9 | 9 |
| Curd | 0 | 275 | 6 | 2 | 13 |
| Curd | 4 | 255 | 6 | 2 | 13 |
| Curd | 8 | 245 | 6 | 3 | 14 |
| Curd | 16 | 283 | 6 | 7 | 12 |
| Curd | 32 | 297 | 8 | 8 | 12 |

**Example 3**

Ingredients:

casein milk obtained by subjecting skimmed goat milk to microfiltration (using a ceramic membrane of pore size 0.1 pm). The casein milk contains 0.2 wt.% fat, 12.25 wt.% protein and 4.1 wt.% lactose. The dry matter solids content of the casein milk is 17.7 wt.%.;

Alginate: Vivapur® FD175 ex Rettenmaier;
Calcium chloride 4 wt.% aqueous solution;
Sodium hydroxide 10 wt.% aqueous solution.

To 300g of casein milk, sodium hydroxide is added dropwise until a pH of the casein milk is 7.5. The resulting casein milk of pH 7.5 is heated for 10 minutes until the temperature of the casein milk is 80°C. To the heated milk an amount of 200 g of a 4 wt.% aqueous solution of the alginate is added with stirring so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed with water. Optionally, a small amount of citric acid is added to the washing water. So as to have a 1 wt.% citric acid solution as a washing fluid.

The resulting product can be directly processed in food products, or it can be frozen and stored for later usage.

**Example 4** (reference example not according to the invention)

Ingredients:

skimmed bovine casein milk powder (obtained from subjecting skimmed bovine milk to microfiltration followed by evaporation). The casein milk powder contains 1 wt.% fat, 67 wt.% protein and 22 wt.% lactose. The dry matter solids content of the casein milk powder 99.6 wt.%.;
Cream obtained from bovine milk, containing 40 wt.% of fat, 2.15 wt.% of protein, and having a dry matter solids content of 44.5 wt.%;
Alginate: Vivapur® FD175 ex Rettenmaier;
Calcium chloride 4 wt.% aqueous solution;
Sodium hydroxide 10 wt.% aqueous solution.
4 g of oat fibre Vitacel® HF 600 ex Rettenmaier.

To 300 g of warm water (45°C), 60 g of casein milk powder is added. Subsequently, 50 g of cream and 6 g of oat fibre are added. The resulting reconstituted casein milk is heated for 10 minutes until the temperature of the casein milk is 80°C. To the heated milk, 200 g of a 4 wt.% aqueous solution of the alginate is added with stirring, so as to obtain a viscous paste.

To the viscous paste 120 ml. of the calcium chloride solution is added. Upon gentle stirring, the alginate forms a fibrous substance with the non-soluble substances from the casein milk. The fibrous substance is isolated and washed as in Example 1.

**Example 5**

Ingredients and procedure are as in Example 2, except that the reconstituted casein milk is heated until a temperature of 85°C is reached and that in three runs the pH is varied. The results are evaluated with reference to the fibre weight, length, and quality, as a function of pH. The lowest pH value in the table is without addition of sodium hydroxide.

The results are depicted in Table 2 below.

Table 2

| pH | Fibre weight (g) | Fibre length number | Fibre quality | Whey loss (wt.%) |
|---|---|---|---|---|
| 6.59 (comparative) | 274 | 3 | 2 | 27 |
| 7.07 | 274 | 6 | 6 | 22 |
| 7.65 | 261 | 7 | 8 | 22 |

As can be seen, without pH raise, in all runs fibres are formed, but the fibres without pH raise are short and of sub-optimal quality. At pH >7 optimal fibre lengths and weights are obtained. In terms of both fibre weight and process quality, the results are outperformed by those obtained with casein milk obtained from a microfiltration process.

**Example 6 (reference example not according to the invention)**

Ingredients:

casein milk as in Example 1;
4g of oat fibre;
9g of alginate: DMB (alginate ex FMC Biopolymer) or Rettenmaier Vivapur® RD175).
200 mL of water to dissolve alginate;
180g of calcium chloride 4 wt.% aqueous solution;
2 of sodium hydroxide 8 wt.% aqueous solution;
10g of 10% solution of emulsifying salt (sodium hexametaphosphate).

Tests are run with making fibrous compositions generally as in Example 1. The pH is not changed (no addition of base, pH about 6.75), no emulsifying salts are added. The following parameters are varied:

(A) Alginate DMB :
(B) Alginate Vivapur®FD 175;

(1) heating to 60°C (heating at 1000W for 1 minute and 20 seconds);
(2) heating to 85°C (heating at 1000W for 2 minute and 10 seconds);

Batches of the casein milk are heated to 60°C or 85°C. To 300 mL heated casein milk, an varying amount of a 4 wt.% aqueous solution of either of the alginates is added with stirring so as to obtain a viscous paste. To the viscous paste 180 ml. of the calcium chloride solution is added. Upon gentle stirring, the alginate forms a fibrous substance with the non-soluble substances from the casein milk. The results are depicted in Table 4 below.

Table 4

| Alginate | Temperature (°C) | Fibre weight (g) | Fibre length number | Fibre quality | Whey loss (wt.%) |
|----------|------------------|------------------|---------------------|---------------|------------------|
| (A) | 60 | 315 | 7 | 5 | 33 |
| (B) | 60 | 324 | 7 | 5 | 34 |
| (A) | 85 | 375 | 9 | 7 | 18 |
| (B) | 85 | 324 | 8 | 7 | 22 |

As can be seen, in the event that the casein milk is heated to 60°C, fibres can be formed without increasing pH and without adding emulsifying salts. Whey loss is relatively high, and the fibres are relatively short. Improved fibres are obtained, and at a much lower whey loss, in the event of heating the casein milk to 85°C.

**Example 7 (reference example not according to the invention)**

Ingredients:

- Fibrous product obtained in accordance with Example 1;
- Chicken aroma
- Chicken egg white
- Methyl cellulose
- Potassium lactate Purasal® HiPure P
- Batter (obtained from wheat flour)
- Bread crumbs

To 1000 g of fibrous product, 25 g of chicken aroma is added. As a binder, 25 g of chicken egg white and 10 g of methyl cellulose are added. The resulting composition is kneaded at a temperature of between -2°C and 4°C, so as to form a dough. An amount of 20 g of potassium lactate is added as a preservative.

The dough is shaped to form schnitzels of about 100 g each. The shaped schnitzel is provided with a layer of batter and then embedded in a layer of bread crumbs. The resulting product is deep-fried for 1 minute at 180°C. The resulting end-product, which is a meat replacement resembling chicken schnitzel, can be frozen and stored, or can be directly prepared for consumption by frying.

## Claims

1. A process for the preparation of a fibrous composition by providing a casein-containing milk-based liquid selected from the group consisting of dissolved casein powder obtained from subjecting milk to microfiltration, a retentate obtained by subjecting milk to microfiltration, and mixtures thereof, subjecting said liquid to a treatment step comprising increasing its temperature to 60°C to 95°C, and increasing its pH to a value of 7 to 9, prior to adding an alginate, adding an alginate so as to form a liquid mass, and contacting the liquid mass with an aqueous solution comprising calcium ions so as to form fibres.

2. A process according to claim 1, comprising increasing the temperature to 80°C to 90°C.

3. A process according to claim 1 or 2, wherein the pH increase is to 7.0 to 8.0, such as 7.2 to 7.4.

4. A process according to any one of the preceding claims, wherein the temperature is kept at or above 60°C when the alginate is added.

5. A process according to any one of the preceding claims, wherein the milk is cow's milk or goat's milk.

## Patentansprüche

1. Verfahren zur Herstellung einer faserigen Zusammensetzung durch Bereitstellen einer kaseinhaltigen Milch-basierten Flüssigkeit, ausgewählt aus der Gruppe bestehend aus gelöstem Kaseinpulver, erhalten durch Unterziehen von Milch einer Mikrofiltration, einem Retentat, erhalten durch Unterziehen von Milch einer Mikrofiltration, und Mischungen davon, Unterziehen der Flüssigkeit einem Behandlungsschritt, umfassend Erhöhen ihrer Temperatur auf 60 °C bis 95 °C, und Erhöhen ihres pHs auf einen Wert von 7 bis 9, vor dem Zugeben eines Alginats, Zugeben eines Alginats, um eine flüssige Masse zu bilden, und Inkontaktbringen der flüssigen Masse mit einer wässrigen Lösung, umfassend Calciumionen, um Fasern zu bilden.

2. Verfahren nach Anspruch 1, umfassend Erhöhen der Temperatur auf 80 °C bis 90 °C.

3. Verfahren nach Anspruch 1 oder 2, wobei die pH Erhöhung auf 7,0 bis 8,0, so wie 7,2 bis 7,4, ist.

4. Verfahren nach einem der vorhergehenden Ansprüche, wobei die Temperatur bei oder über 60 °C gehalten wird, wenn das Alginat zugegeben wird.

5. Verfahren nach einem der vorhergehenden Ansprüche, wobei die Milch Kuhmilch oder Ziegenmilch ist.

## Revendications

1. Un procédé de préparation d'une composition fibreuse par apport d'un liquide à base de lait, contenant de la caséine, choisi dans le groupe consistant en poudre de caséine dissoute obtenue en soumettant du lait à une microfiltration, un rétentat obtenu par microfiltration du lait, ainsi que leurs mélanges, en soumettant ledit liquide à une étape de traitement comprenant une augmentation de sa température de 60°C à 95°C et l'augmentation de son pH à une valeur de 7 à 9, avant addition d'un alginate, en ajoutant un alginate de manière à former une masse liquide et en mettant en contact la masse liquide avec une solution aqueuse comprenant des ions de calcium de manière à former des fibres.

2. Procédé selon la revendication 1, comprenant une augmentation de la température à une valeur de 80°C à 90°C.

3. Procédé selon la revendication 1 ou 2, dans lequel l'augmentation du pH est de 7,0 à 8,0, par exemple de 7,2 à 7,4.

4. Procédé selon l'une quelconque des revendications précédentes, dans lequel la température est maintenue à 60°C ou plus lorsque l'alginate est ajouté.

5. Procédé selon l'une quelconque des revendications précédentes, dans lequel le lait est du lait de vache ou du lait de chèvre.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03061400 A
- EP 1588626 A
- EP 1643850 A
- EP 1643851 A
- EP 1771085 A
- AU 2008200828
- EP 0174192 A
- EP 1759593 A